# EUROPEAN PATENT APPLICATION

(11) **EP 4 292 501 A1**
(43) Date of publication of application: **20.12.2023**
(21) Application number: 21925367.1
(22) Date of filing: 09.06.2021
(51) Int. Cl.: A47L 11/40, G05D 1/02

(54) **AUTOMATIC CLEANING DEVICE CONTROL METHOD AND APPARATUS, MEDIUM, AND ELECTRONIC DEVICE**

(30) Priority: 10.02.2021 CN 202110184743
(71) Applicant: Beijing Roborock Innovation Technology Co., Ltd., Beijing 102206 (CN)
(72) Inventor: ZHANG, Lei, Beijing 102206 (CN); GUAN, Xin, Beijing 102206 (CN)
(74) Representative: Cabinet Beau de Loménie
(86) International application number: PCT/CN2021/099221
(87) International publication number: WO 2022/170713

(57) **Abstract**

An automatic cleaning device control method, an automatic cleaning device control apparatus, a computer-readable storage medium, and an electronic device, relating to the technical field of smart home. The method comprises: when an automatic cleaning device cleans in a first surface medium area, scanning boundaries of second surface medium areas, and generating a second surface medium area set (S2610); using boundary points in the second surface medium area set as obstacle points and storing same in a path search map (S2620); if no obstacle-free path to a target point is found on the basis of the obstacle points, determining passing paths to the target point according to the path search map (S2630); and determining the shortest path among the passing paths, and controlling the automatic cleaning device to be unstuck along the shortest path (S2640). The method can improve the capability of the automatic cleaning device to be automatically unstuck, reducing the failure rate of the automatic cleaning device, and improving the user experience.

## Description

### CROSS-REFERENCE TO RELATED APPLICATION

This application claims priority to Chinese Patent Application No. 202110184743.9, filed on February 10, 2021 and entitled "METHOD AND DEVICE FOR CONTROLLING AUTOMATIC CLEANING APPARATUS, MEDIUM, AND ELECTRONIC DEVICE", the entire contents of which are incorporated herein by reference.

### TECHNICAL FIELD

The present disclosure relates to the field of smart home and, more particularly, to a method for controlling an automatic cleaning apparatus, a device for controlling an automatic cleaning apparatus, a computer-readable storage medium, and an electronic device.

### BACKGROUND

In recent years, with the rapid development of computer technologies and artificial intelligence science, intelligent robotics has gradually become a hot spot in the field of modern robotics research. As one of the most practical intelligent robots, ground sweeping robots can automatically complete the cleaning of the ground with certain artificial intelligence.

At present, more and more homes are paved with carpets, and the ground sweeping robot may easily be trapped due to the carpet or other obstacles as encountered in the process of cleaning along the wall or carpet.

However, no method for dealing with the trapping phenomenon is provided currently, and the ground sweeping robot can only stay in a trapped state or wait for a person to extricate it.

### BRIEF SUMMARY

According to an aspect of the present disclosure, a method for controlling an automatic cleaning apparatus is provided. The method includes: scanning a boundary of a second surface medium region when the automatic cleaning apparatus cleans a first surface medium region, and generating a second surface medium region set; treating boundary points in the second surface medium region set as obstacle points, and storing the obstacle points in a path searching map; determining passage paths to a target point based on the path searching map if no obstacle-free path to the target point is searched out based on the obstacle points; and determining the shortest path from the passage paths, and controlling the automatic cleaning apparatus to extricate itself along the shortest path.

According to an example embodiment of the present disclosure, the scanning the boundary of the second surface medium region and generating the second surface medium region set includes: scanning the boundary of the second surface medium region, generating an initialized region, and recording the initialized region; acquiring a merged region by merging boundary coordinates of the initialized region; and splitting the merged region into a plurality of subregions according to a predetermined shape, the plurality of subregions forming the second surface medium region set.

According to an example embodiment of the present disclosure, the treating the boundary points in the second surface medium region set as obstacle points includes: treating boundary points in each subregion of the second surface medium region set as the obstacle points; and adding the obstacle points to the path searching map.

According to an example embodiment of the present disclosure, the determining the passage paths to the target point based on the path searching map includes: performing a step of deleting target obstacle points, wherein the step of deleting the target obstacle points includes determining, based on the path searching map, a reachable region and an unreachable region of the automatic cleaning apparatus based on a current location of the automatic cleaning apparatus; looking for, based on a connection boundary between the reachable region and the unreachable region, obstacle points on the connection boundary and treating the obstacle points on the connection boundary as the target obstacle points; deleting the target obstacle points from the path searching map; and repeating the step of deleting the target obstacle points until the passage path to the target point is searched out from the path searching map where the target obstacle points have been deleted.

According to an example embodiment of the present disclosure, the looking for the target obstacle points based on the connection boundary between the reachable region and the unreachable region includes: looking for, based on the connection boundary between the reachable region and the unreachable region, the obstacle points on the connection boundary that are close to the automatic cleaning apparatus, and treating the obstacle points on the connection boundary that are close to the automatic cleaning apparatus as the target obstacle points.

According to an example embodiment of the present disclosure, the determining the passage path to the target point based on the path searching map includes: determining a region having the smallest area from the second surface medium region set; deleting boundary points of the region having the smallest area from the path searching map, and updating obstacle points in the path searching map; and determining the passage path to the target point from the updated obstacle points.

According to an example embodiment of the present disclosure, the method is applied to the automatic cleaning apparatus in a mode of cleaning only the first surface medium region.

According to an aspect of the present disclosure, a device for controlling an automatic cleaning apparatus is provided. The device includes: a region set generating module configured to scan a boundary of a second surface medium region when the automatic cleaning apparatus cleans a first surface medium region and generate a second surface medium region set; an obstacle point storing module configured to treat boundary points in the second surface medium region set as obstacle points, and store the obstacle points in a path searching map; a path determining module configured to determine passage paths to a target point based on the path searching map if no obstacle-free path to the target point is searched out based on the obstacle points; and an extrication controlling module configured to determine the shortest path from the passage paths and control the automatic cleaning apparatus to extricate itself along the shortest path.

According to an aspect of the present disclosure, a computer-readable storage medium is provided. The computer-readable storage medium stores computer programs, wherein the computer programs, when executed by a processor, implement the method for controlling the automatic cleaning apparatus according to the aforesaid aspects.

According to an aspect of the present disclosure, an electronic device is provided. The electronic device includes: a processor, and a memory configured to store a processor-executable instruction, wherein the processor is configured to implement the method for controlling the automatic cleaning apparatus according to the aforesaid aspects by executing the executable instruction.

It should be understood that the above general description and the following detailed description are merely example and explanatory, and thereby do not limit the present disclosure.

### BRIEF DESCRIPTION OF THE DRAWINGS

The accompanying drawings here, which are incorporated in the Description and constitute a part of the Description, show embodiments conforming to the present disclosure, and are used to explain the principles of the present disclosure together with the Description. Apparently, the accompanying drawings in the following description show merely some embodiments of the present disclosure, and a person of ordinary skill in the art may still derive other accompanying drawings from these accompanying drawings without creative efforts.
FIG. 1 is an oblique view of an automatic cleaning apparatus according to an embodiment of the present disclosure;
FIG. 2 is a schematic structural diagram of a bottom of an automatic cleaning apparatus according to an embodiment of the present disclosure;
FIG. 3 is an oblique view of a driving wheel assembly on a side according to an embodiment of the present disclosure;
FIG. 4 is a front view of the driving wheel assembly on a side according to an embodiment of the present disclosure;
FIG. 5 is an oblique view of a dust box according to an embodiment of the present disclosure;
FIG. 6 is an oblique view of a blower according to an embodiment of the present disclosure;
FIG. 7 is a schematic diagram of a dust box in an open state according to an embodiment of the present disclosure;
FIG. 8 is a schematic diagram of a dust box and a blower in an assembled state according to an embodiment of the present disclosure;
FIG. 9 is an exploded view of an automatic cleaning apparatus according to an embodiment of the present disclosure;
FIG. 10 is a structural diagram of a supporting platform of an automatic cleaning apparatus according to an embodiment of the present disclosure;
FIG. 11 is a structural diagram of a vibrating member of an automatic cleaning apparatus according to an embodiment of the present disclosure;
FIG. 12 is a schematic diagram of a cleaning head driving mechanism based on a crank slider mechanism according to another embodiment of the present disclosure;
FIG. 13 is a schematic diagram of a cleaning head driving mechanism based on a double-crank mechanism according to another embodiment of the present disclosure;
FIG. 14 is a schematic diagram of a cleaning head driving mechanism based on a crank mechanism according to another embodiment of the present disclosure;
FIG. 15 is a schematic diagram of an automatic cleaning apparatus in a lifting state according to an embodiment of the present disclosure;
FIG. 16 is a schematic diagram of an automatic cleaning apparatus in a lowering state according to an embodiment of the present disclosure;
FIG. 17 is a schematic diagram of a four-link lifting and lowering structure in a lifting state according to an embodiment of the present disclosure;
FIG. 18 is a schematic diagram of a four-link lifting and lowering structure in a lowering state according to an embodiment of the present disclosure;
FIG. 19 is a route diagram of an automatic cleaning apparatus while sweeping along a wall according to an embodiment of the present disclosure;
FIG. 20 is a schematic structural diagram of an automatic cleaning apparatus being trapped while sweeping along a wall according to an embodiment of the present disclosure;
FIG. 21 is a first schematic route diagram of an automatic cleaning apparatus while sweeping along an edge of a carpet according to an embodiment of the present disclosure;
FIG. 22 is a second schematic route diagram of an automatic cleaning apparatus while sweeping along an edge of a carpet according to an embodiment of the present disclosure;
FIG. 23 is a third schematic route diagram of an automatic cleaning apparatus while sweeping along an edge of a carpet according to an embodiment of the present disclosure;
FIG. 24 is a schematic structural diagram of an automatic cleaning apparatus being trapped while sweeping along an edge of a carpet according to an embodiment of the present disclosure;
FIG. 25 is a flow chart of a method for controlling an automatic cleaning apparatus according to an embodiment of the present disclosure;
FIG. 26 is a schematic structural diagram of an automatic cleaning apparatus being trapped by a second surface medium region according to an embodiment of the present disclosure;
FIG. 27 is a schematic structural diagram of an initialized region after scanning the second surface medium region shown in FIG. 26;
FIG. 28 is a schematic structural diagram of a merged region acquired based on the initialized region shown in FIG. 27;
FIG. 29 is a schematic structural diagram of a subregion as determined based on the merged region shown in FIG. 28;
FIG. 30 is a schematic structural diagram of a communication path determined based on a first passage path determining method according to an embodiment of the present disclosure;
FIG. 31 is a schematic structural diagram of a communication path determined based on a second passage path determining method according to an embodiment of the present disclosure;
FIG. 32 is a block diagram of a device for controlling an automatic cleaning apparatus according to an embodiment of the present disclosure; and
FIG. 33 is a schematic diagram of modules of an electronic device according to an embodiment of the present disclosure.

### DETAILED DESCRIPTION

Example embodiments will now be described more fully with reference to the accompanying drawings. However, the example embodiments may be implemented in various forms, and shall not be limitedly understood as the embodiments set forth herein. On the contrary, provision of these embodiments may enable the present disclosure to be more comprehensive and complete and thereby convey the concept of example embodiments to those skilled in the art. The same reference signs in the drawings may indicate the same or similar structures, and thus their detailed descriptions will be omitted.

Although relative terms such as "up" and "down" are adopted in this specification to describe the relative relationship of one component represented by a reference sign to another, these terms are adopted in this specification only for convenience, for example, based on the direction of the example described in the accompanying drawings. It is understood that if the device shown by the reference sign is flipped to make it upside down, the component described as being "up" may become the component described as being "down". Other relative terms such as "high", "low", "top", "bottom" "left", "right", etc. also have the similar meanings. When a structure is "on" other structures, it may mean that a structure is integrally formed on other structures, or that a structure is "directly" provided on other structures, or that a structure is "indirectly" provided on other structures via another structure.

The terms "a", "one", and "the" are adopted to indicate the existence of one or more elements/components/etc.; and the terms "include" and "have" are adopted to indicate open-ended inclusion and to mean that additional elements/components/etc. may exist besides the listed elements/components/etc.

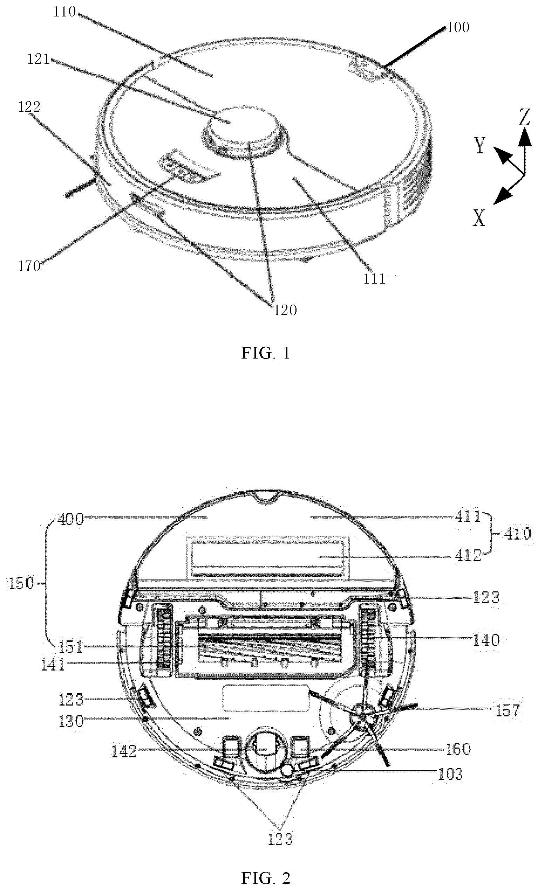

FIGs. 1-2 are schematic structural diagrams of an automatic cleaning apparatus according to an example embodiment. As shown in FIGs. 1-2, the automatic cleaning apparatus may be a vacuum ground sucking robot, or may be a ground mopping/brushing robot, or may be a window climbing robot, or the like. The automatic cleaning apparatus may include a mobile platform 100, a perception system 120, a control system 130, a driving system 140, a cleaning module 150, an energy system 160, and a human-computer interaction system 170.

The mobile platform 100 may be configured to move automatically along a target direction on an operating surface. The operating surface may be a surface to be cleaned by the automatic cleaning apparatus. In some embodiments, the automatic cleaning apparatus may be a ground mopping robot, and thus the automatic cleaning apparatus operates on a ground, and the ground is the operating surface. The automatic cleaning apparatus may also be a window cleaning robot, and thus the automatic cleaning apparatus operates on an outer surface of glass of a building, and the glass is the operating surface. The automatic cleaning apparatus may also be a pipe cleaning robot, and thus the automatic cleaning apparatus operates on an inner surface of a pipe, and the inner surface of the pipe is the operating surface. For the purpose of presentation only, the following description in the present application takes a ground mopping robot as an example for illustration.

In some embodiments, the mobile platform 100 may be an autonomous mobile platform, or a non-autonomous mobile platform. The autonomous mobile platform refers to that the mobile platform 100 itself can automatically and adaptively make an operational decision based on an unexpected environmental input; and the non-autonomous mobile platform itself cannot adaptively make an operational decision based on an unexpected environmental input, but can execute a given procedure or operate according to a certain logic. Correspondingly, when the mobile platform 100 is the autonomous mobile platform, the target direction may be determined autonomously by the automatic cleaning apparatus; and when the mobile platform 100 is the non-autonomous mobile platform, the target direction may be set systematically or manually. When the mobile platform 100 is the autonomous mobile platform, the mobile platform 100 includes a forward portion 111 and a rearward portion 110.

The perception system 120 includes a position determining device 121 located above the mobile platform 100, a buffer 122 located in the forward portion 111 of the mobile platform 100, cliff sensors 123 and sensing devices such as an ultrasonic sensor (not shown), an infrared sensor (not shown), a magnetometer (not shown), an accelerometer (not shown), a gyroscope (not shown) an odometer (not shown), and the like located at a bottom of the mobile platform 100, for providing various position information and motion state information of the automatic cleaning apparatus to the control system 130.

In order to describe behaviors of the automatic cleaning apparatus more clearly, directions are defined as follows: the automatic cleaning apparatus may travel on the ground by various combinations of movements relative to the following three mutually perpendicular axes defined by the mobile platform 100, i.e., a transversal axis x, a front and rear axis y and a center vertical axis z. A forward driving direction along the front and rear axis y is designated as "forward", and a rearward driving direction along the front and rear axis y is designated as "rearward". The transversal axis x is substantially along a direction of an axis center defined by a center point of a driving wheel assembly 141 extending between a right wheel and a left wheel of the automatic cleaning apparatus. The automatic cleaning apparatus may rotate around the x axis. It is referred to as "pitch up" when the forward portion of the automatic cleaning apparatus is tilted upward and the rearward portion thereof is tilted downward, and it is referred to as "pitch down" when the forward portion of the automatic cleaning apparatus is tilted downward and the rearward portion thereof is tilted upward. In addition, the automatic cleaning apparatus may rotate around the z axis. In a forward direction of the automatic cleaning apparatus, it is referred to as "turn right" when the automatic cleaning apparatus is tilted to the right of the y axis, and it is referred to as "turn left" when the automatic cleaning apparatus is tilted to the left of the y axis.

As shown in FIG. 2, cliff sensors 123 are provided at the bottom of the mobile platform 100 and in front and rear of the driving wheel assembly 141, respectively, for preventing the automatic cleaning apparatus from falling off when the automatic cleaning apparatus reverses, so as to avoid a damage to the automatic cleaning apparatus. The aforementioned "front" refers to a side same as a travelling direction of the automatic cleaning apparatus, and the aforementioned "rear" refers to a side opposite to the travelling direction of the automatic cleaning apparatus.

The position determining device 121 includes, but is not limited to, a camera and a laser distance sensor (LDS) device.

Various components in the perception system 120 may operate independently, or operate together to achieve a purpose function more accurately. The surface to be cleaned is identified by the cliff sensors 123 and the ultrasonic sensor to determine physical properties of the surface to be cleaned, including a surface medium, a degree of cleanliness, and the like, and may be determined more accurately in combination with the camera, the LDS device, or the like.

For example, the ultrasonic sensor may determine whether the surface to be cleaned is a carpet. If the ultrasonic sensor determines that the surface to be cleaned is made of a carpet material, the control system 130 controls the automatic cleaning apparatus to perform cleaning in a carpet mode.

The forward portion 111 of the mobile platform 100 is provided with the buffer 122. During cleaning, when the driving wheel assembly 141 propels the automatic cleaning apparatus to travel on the ground, the buffer 122 detects one or more events (or objects) in a travelling path of the automatic cleaning apparatus via a sensor system, e.g., an infrared sensor, and the automatic cleaning apparatus may control the driving wheel assembly 141 based on the event (or object), such as an obstacle or a wall, detected by the buffer 122 to cause the automatic cleaning apparatus to respond to the event (or object), for example, to move away from the obstacle.

The control system 130 is disposed on a main circuit board in the mobile platform 100, and includes a computing processor such as a central processing unit or an application processor, that communicates with a non-transitory memory such as a hard disk, a flash memory and a random-access memory. The application processor is configured to receive environmental information sensed by the plurality of sensors and transmitted from the perception system 120, to draw a simultaneous map of an environment where the automatic cleaning apparatus is located using a positioning algorithm e.g., simultaneous localization and mapping (SLAM), based on obstacle information fed back by the LDS device, and to autonomously determine a travelling path based on the environmental information and the environmental map, and then to control the driving system 140 to perform operations, such as travelling forward, travelling backward, and/or steering based on the autonomously determined travelling path. Further, the control system 130 may also determine whether to activate the cleaning module 150 to perform a cleaning operation based on the environmental information and the environmental map.

Specifically, the control system 130 may, based on distance information and speed information which are fed back by the buffer 122, the cliff sensors 123 and the sensing devices such as the ultrasonic sensor, the infrared sensor, the magnetometer, the accelerometer, the gyroscope and the odometer, comprehensively determine a current operation state of the ground sweeping robot, such as crossing a threshold, getting on a carpet, locating at an edge of a cliff, being stuck from above or below, having a full dust box or being picked up, and will also give specific next-step action strategies for different situations, so that the operation of the automatic cleaning apparatus is more in line with requirements of an owner and provides better user experience. Further, the control system can plan the most efficient and reasonable cleaning path and cleaning mode based on the simultaneous map drawn by the SLAM, thereby greatly improving the cleaning efficiency of the automatic cleaning apparatus.

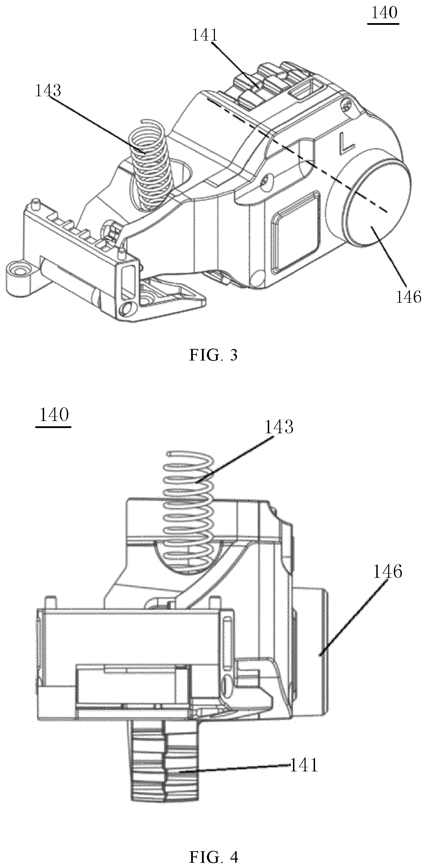

The driving system 140 may execute a driving command based on specific distance and angle information, such as x, y, and theta components, to manipulate the automatic cleaning apparatus to travel across the ground. FIG. 3 and FIG. 4 are an oblique view and a front view of a driving wheel assembly 141 on a side according to an embodiment of the present disclosure, respectively. As shown in the figures, the driving system 140 includes the driving wheel assembly 141, and may control a left wheel and a right wheel simultaneously. In order to control the motion of the apparatus more precisely, the driving system 140 preferably includes a left driving wheel assembly and a right driving wheel assembly. The left driving wheel assembly and the right driving wheel assembly are arranged symmetrically along a transversal axis defined by the mobile platform 100. The driving wheel assembly includes a housing and a connecting frame. A driving motor 146 is provided in the driving wheel assembly and located outside the driving wheel assembly 141; and an axis center of the driving motor 146 is located within a sectional projection of the driving wheel assembly, and the driving wheel assembly 141 may also be connected to a circuit for measuring a driving current and the odometer.

In order for the automatic cleaning apparatus to move on the ground more stably or have a stronger movement ability, the automatic cleaning apparatus may include one or more steering assemblies 142, wherein the steering assembly 142 may be a driven wheel or a driving wheel, and structurally includes but is not limited to a universal wheel. The steering assembly 142 may be located in front of the driving wheel assembly 141.

The driving motor 146 provides power for rotation of the driving wheel assembly 141 and/or the steering assembly 142.

The driving wheel assembly 141 may be detachably connected to the mobile platform 100 to facilitate assembly, disassembly, and maintenance. The driving wheel may have an offset drop suspension system movably fastened, e.g., rotatably attached, to the mobile platform 100 of the automatic cleaning apparatus, and maintain contact and traction with the ground by an elastic element 143 such as a tension spring or a compression spring with a certain grounding force; and meanwhile, the cleaning module 150 of the automatic cleaning apparatus is also in contact with the surface to be cleaned with a certain pressure.

The energy system 160 includes a rechargeable battery, such as a nickel-hydride battery and a lithium battery. The rechargeable battery may be connected with a charging control circuit, a battery pack charging temperature detecting circuit and a battery undervoltage monitoring circuit, wherein the charging control circuit, the battery pack charging temperature detecting circuit and the battery undervoltage monitoring circuit are then connected to a single-chip microcomputer control circuit. A host of the automatic cleaning apparatus is connected to a charging pile through a charging electrode disposed on a side of or below a body of the automatic cleaning apparatus for charging. A bare charging electrode, if stained with dust, may cause the plastic body around the electrode to be melted and deformed during the charging process due to a cumulative effect of the charges, or even cause the electrode itself to be deformed and unable to charge normally.

The human-computer interaction system 170 includes buttons that are on a panel of the host and used by a user to select functions. The human-computer interaction system 170 may further include a display screen and/or an indicator light and/or a horn that presents a current state or function item of the automatic cleaning apparatus to the user. The human-computer interaction system 170 may further include a mobile client program. For a route navigation type cleaning apparatus, a mobile client may present a map of the environment where the apparatus is located and a position of the apparatus to the user, which may provide richer and more user-friendly function items to the user.

The cleaning module 150 may include a dry cleaning module 151 and/or a wet cleaning module 400.

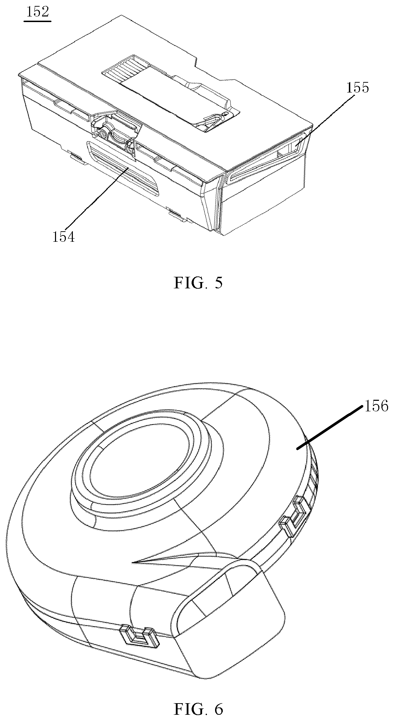

As shown in FIGs. 5-8, the dry cleaning module 151 includes a rolling brush, a dust box, a blower and an air outlet. The rolling brush having a certain interference with the ground sweeps up garbage on the ground and rolls up the garbage to the front of a dust suction inlet between the rolling brush and the dust box, and then the garbage is sucked into the dust box by air having a suction force, which is generated by the blower and passes through the dust box. A dust removal capacity of the ground sweeping robot may be characterized by a dust pickup efficiency (DPU) of the garbage. The DPU is affected by a structure and material of the rolling brush, by a utilization rate of the air in an air channel formed by the dust suction inlet, the dust box, the blower, the air outlet and connecting components between the four, and by a type and power of the blower, which is a complex systematic design problem. Compared to an ordinary plug-in vacuum cleaner, the improvement of the dust removal capacity is more meaningful for an automatic cleaning apparatus with limited energy because the improvement of the dust removal capacity directly and effectively reduces requirements for energy, that is, the original cleaning apparatus that may clean 80 square meters of the ground on a single charge may be evolved to clean 180 square meters or more on a single charge. Furthermore, the service life of the battery with the reduced number of charging times will also be greatly increased, so that the frequency of replacing the battery by the user will also be decreased. More intuitively and importantly, the improvement of the dust removal capacity is the most apparent and important user experience, as the user will directly determine whether the thorough cleaning is achieved. The dry cleaning module may further include a side brush 157 having a rotary shaft angled relative to the ground, for moving debris into a region of the rolling brush of the cleaning module 150.

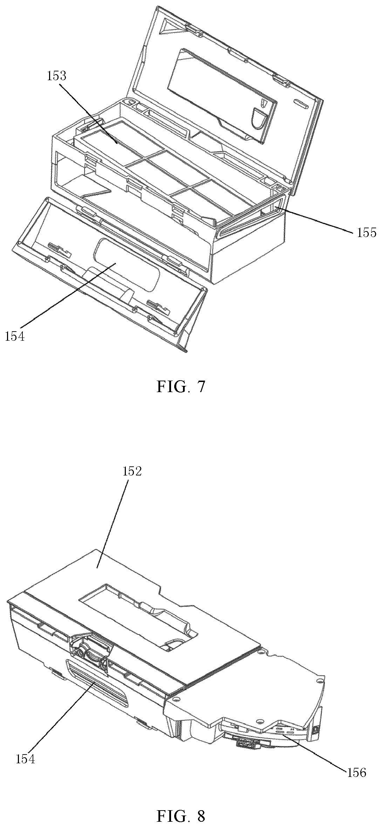

FIG. 5 is a schematic structural diagram of a dust box 152 in the dry cleaning module, FIG. 6 is a schematic structural diagram of a blower 156 in the dry cleaning module, FIG. 7 is a schematic diagram of the dust box 152 in an open state, and FIG. 8 is a schematic diagram of the dust box and the blower in an assembled state.

The rolling brush having a certain interference with the ground sweeps up garbage on the ground and rolls up the garbage to the front of the dust suction inlet 154 between the rolling brush and the dust box 152, and then the garbage is sucked into the dust box 152 by air having a suction force, which is generated by the blower 156 and passes through the dust box 152. The garbage is isolated inside the dust box 152 close to the dust suction inlet 154 by a filter screen 153, and the filter screen 153 completely isolates the dust suction inlet from the air outlet, so that the filtered air enters the blower 156 through the air outlet 155.

Typically, the dust suction inlet 154 of the dust box 152 is located in front of the automatic cleaning apparatus, the air outlet 155 is located on a side of the dust box 152, and an air suction port of the blower 156 is docked with the air outlet of the dust box.

A front panel of the dust box 152 may be opened for cleaning the garbage in the dust box 152.

The filter screen 153 is detachably connected to a body of the dust box 152 to facilitate assembling, disassembling and cleaning the filter screen.

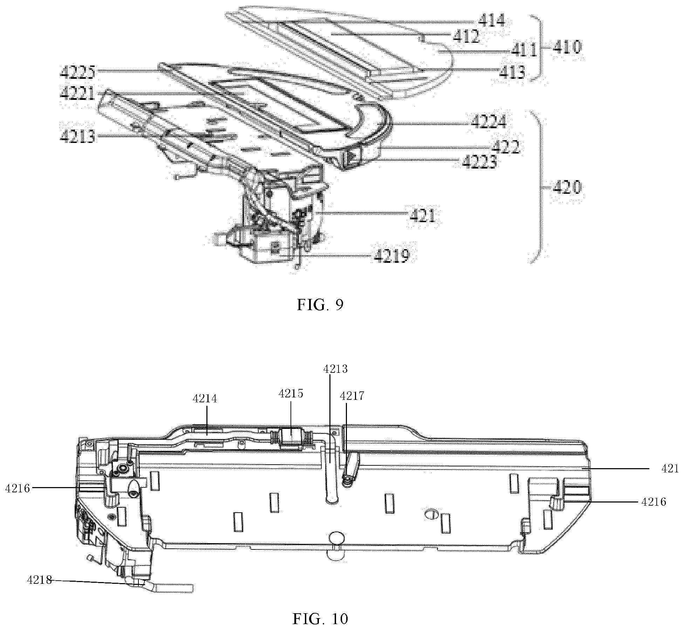

As shown in FIGs. 9-11, the wet cleaning module 400 according to the present disclosure is configured to clean at least a part of the operating surface by means of wet cleaning. The wet cleaning module 400 includes a cleaning head 410 and a driving unit 420. The cleaning head 410 is used for cleaning at least a part of the operating surface, and the driving unit 420 is used for driving the cleaning head 410 to reciprocate along a target surface, the target surface being a part of the operating surface. The cleaning head 410 reciprocates along a surface to be cleaned, and a surface of the cleaning head 410 in contact with the surface to be cleaned is provided with a cleaning cloth or a cleaning plate, which generates a high-frequency friction with the surface to be cleaned through reciprocating motion, thereby removing stains on the surface to be cleaned. The reciprocating motion may be a repeated motion along any one or more directions within the operating surface, or may be a vibrating motion perpendicular to the operating surface, which is not strictly limited.

As shown in FIG. 9, the driving unit 420 includes: a driving platform 421 connected to a bottom surface of the mobile platform 100 for providing a driving force; and a supporting platform 422 detachably connected to the driving platform 421, for supporting the cleaning head 410 and being able to lift and lower under the driving of the driving platform 421.

A lifting and lowering module is provided between the cleaning module 150 and the mobile platform 100, so that the cleaning module 150 may be in better contact with the surface to be cleaned, or different cleaning strategies may be used for surfaces to be cleaned made of different materials.

The dry cleaning module 151 may be connected to the mobile platform 100 by a passive lifting and lowering module. When the cleaning apparatus encounters an obstacle, the dry cleaning module 151 may pass the obstacle more easily through the lifting and lowering module.

The wet cleaning module 400 may be connected to the mobile platform 100 by an active lifting and lowering module. When the wet cleaning module 400 does not participate in the operation temporarily, or when a surface to be cleaned cannot be cleaned by the wet cleaning module 400, the wet cleaning module 400 is lifted by the active lifting and lowering module and separated from the surface to be cleaned, so as to realize the change of cleaning means.

As shown in FIGs. 10-11, the driving platform 421 includes: a motor 4211 disposed on a side of the driving platform 421 close to the mobile platform 100 and for outputting power through a motor output shaft; a driving wheel 4212 connected to the output shaft of the motor and having an asymmetric structure; and a vibrating member 4213 disposed on a side of the driving platform 421 opposite to the motor 4211 and connected to the driving wheel 4212 to reciprocate under the asymmetrical rotation of the driving wheel 4212.

The driving platform 421 may further include a driving wheel and a gear mechanism. The gear mechanism 235 may connect the motor 4211 and the driving wheel 4212. The motor 4211 may directly drive the driving wheel 4212 to swivel, or may indirectly drive the driving wheel 4212 to swivel through the gear mechanism. Those of ordinary skills in the art may understand that the gear mechanism may be one gear, or may be a gear set composed of a plurality of gears.

The motor 4211 simultaneously transmits, through a power transmission device, power to the cleaning head 410, the driving platform 421, the supporting platform 422, a water delivery mechanism, a water tank, and the like. The energy system 160 provides power and energy for the motor 4211 and is entirely controlled by the control system 130. The power transmission device may be a gear drive, a chain drive, a belt drive, or may be a worm gear, or the like.

The motor 4211 has a forward output mode and a reverse output mode. In the forward output mode, the motor 4211 rotates in the forward direction; and in the reverse output mode, the motor 4211 rotates in the reverse direction. In the forward output mode of the motor 4211, the motor 4211 simultaneously drives, through the power transmission device, the water delivery mechanism and the vibrating member 410 in the wet cleaning module to move synchronously.

Further, the driving platform 421 further includes a connecting rod 4214 extending along an edge of the driving platform 421 and connecting the driving wheel 4212 and the vibrating member 4213, so that the vibrating member 4213 extends to a preset position. An extension direction of the vibrating member 4213 is perpendicular to the connecting rod 4214.

The motor 4211 is connected to the driving wheel 4212, the vibrating member 4213, the connecting rod 4214 and a vibration buffering device 4215 through the power transmission device. When the wet cleaning module 400 is activated, the motor 4211 is started to rotate forward to drive the connecting rod 4214 through the driving wheel 4212 to reciprocate along the surface of the driving platform 421; and meanwhile, the vibration buffering device 4215 drives the vibrating member 4213 to reciprocate along the surface of the driving platform 421, the vibrating member 4213 drives a cleaning substrate 4221 to reciprocate along the surface of the supporting platform 422, and the cleaning substrate 4221 drives a movable region 412 to reciprocate along the surface to be cleaned. At this time, a clean water pump enables clean water to flow out of a clean water tank and sprinkles the clean water on the cleaning head 410 through a water discharging device 4217, and the cleaning head 410 reciprocates to clean the surface to be cleaned.

The cleaning intensity/efficiency of the automatic cleaning apparatus may also be automatically and dynamically adjusted according to an operation environment of the automatic cleaning apparatus. For example, the automatic cleaning apparatus may achieve dynamic adjustment according to physical information of the surface to be cleaned detected by the perception system 120. For example, the perception system 120 may detect the flatness of the surface to be cleaned, a material of the surface to be cleaned, the existence of oil and dust, and other information, and transmit the information to the control system 130 of the automatic cleaning apparatus. Correspondingly, the control system 130 may instruct the automatic cleaning apparatus to automatically and dynamically adjust a rotational speed of the motor and a transmission ratio of the power transmission device according to the operation environment of the automatic cleaning apparatus, so as to adjust a preset reciprocating period of the reciprocating motion of the cleaning head 410.

For example, when the automatic cleaning apparatus operates on a flat ground, the preset reciprocating period may be automatically and dynamically adjusted to be longer, and a water volume of the water pump may be automatically and dynamically adjusted to be smaller; and when the automatic cleaning apparatus operates on a less flat ground, the preset reciprocating period may be automatically and dynamically adjusted to be shorter, and the water volume of the water pump may be automatically and dynamically adjusted to be larger. This is because it is easier to clean the flat ground than the less flat ground, and thus the reciprocating motion of the cleaning head 410 at a higher speed (i.e., a higher frequency) and in the larger water volume are needed for cleaning an uneven ground.

For another example, when the automatic cleaning apparatus operates on a table, the preset reciprocating period may be automatically and dynamically adjusted to be longer, and the water volume of the water pump may be automatically and dynamically adjusted to be smaller; and when the automatic cleaning apparatus 100 operates on a ground, the preset reciprocating period may be automatically and dynamically adjusted to be shorter, and the water volume of the water pump may be automatically and dynamically adjusted to be larger. This is because the table has less dust and oil compared to the ground, the material of the table is also easier to clean, and thus, the table can be cleaned with the fewer number of reciprocating motions of the cleaning head 410 and the relatively smaller water volume of the water pump.

The supporting platform 422 includes a cleaning substrate 4221 movably disposed on the supporting platform 422 and reciprocating under the vibration of the vibrating member 4213. Optionally, the cleaning substrate 4221 includes an assembly notch 42211 (not shown) disposed at a position in contact with the vibrating member 4213. When the supporting platform 422 is connected to the driving platform 421, the vibrating member 4213 is assembled to the assembly notch, so that the cleaning substrate 4221 may reciprocate synchronously along with the vibrating member 4213.

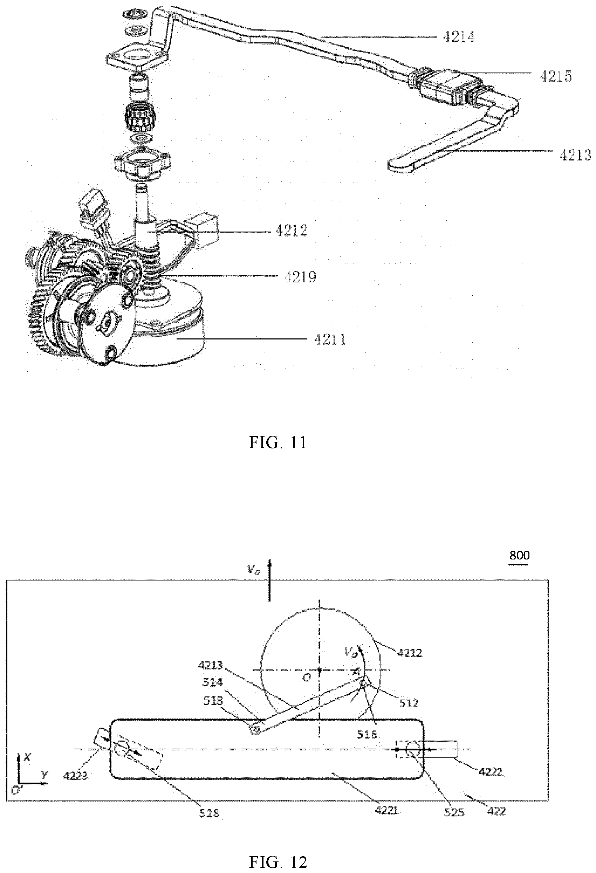

FIG. 12 shows another cleaning head driving mechanism 800 based on a crank slider mechanism according to a plurality of embodiments of the present application. The driving mechanism 800 may be applied to the driving platform 421. The driving mechanism 800 includes a driving wheel 4212, a vibrating member 4213, a cleaning substrate 4221, a sliding slot 4222 (a first sliding slot) and a sliding slot 4223 (a second sliding slot).

The sliding slots 4222 and 4223 are formed in the supporting platform 422. Both ends of the cleaning substrate 4221 include a slider 525 (a first slider) and a slider 528 (a second slider), respectively. Each of the sliders 525 and 528 is a protrusion at each of both ends of the cleaning substrate 4221. The slider 525 is inserted into the sliding slot 4222 and may slide along the sliding slot 4222, and the slider 4223 is inserted into the sliding slot 4223 and may slide along the sliding slot 4223. In some embodiments, the sliding slot 4222 and the sliding slot 4223 are on the same line. In some embodiments, the sliding slot 4222 and the sliding slot 4223 are not on the same line. In some embodiments, the sliding slot 4222 and the sliding slot 4223 extend along the same direction. In some embodiments, an extension direction of the sliding slot 4222 and an extension direction of the sliding slot 4223 are the same as that of the cleaning substrate 4221. In some embodiments, the extension direction of the sliding slot 4222 and the extension direction of the sliding slot 4223 are different from that of the cleaning substrate 4221. In some embodiments, the extension direction of the sliding slot 4222 is different from that of the sliding slot 4223. For example, as shown in FIG. 12, the extension direction of the sliding slot 4222 is the same as that of the cleaning substrate 4221, and the extension direction of the sliding slot 4223 is at a certain angle with that of the sliding slot 4222.

The vibrating member 4213 includes a swiveling end 512 and a sliding end 514. The swiveling end 512 is connected to the driving wheel 4212 through a first pivot 516, and the sliding end 514 is connected to the cleaning substrate 4221 through a second pivot 518.

A swiveling center of the driving wheel 4212 is a point O, and a pivoting center of the first pivot 516 is a point A. The point O and the point A do not coincide, and a distance between the point O and the point A is a preset distance d.

When the driving wheel 4212 rotates, the point A also swivels along a circular path. Correspondingly, the swiveling end 512 follows the point A to swivel along the circular path, and the sliding end 514 drives the cleaning substrate 4221 to slide through the second pivot 518. Correspondingly, the slider 525 of the cleaning substrate 4221 linearly reciprocates along the sliding slot 4222, and the slider 528 linearly reciprocates along the sliding slot 4223. In FIG. 4, a moving speed of the mobile platform 210 is V0, and a moving direction thereof is a target direction. According to some embodiments, when the sliding slot 4223 and the sliding slot 4222 are approximately perpendicular to the direction of the moving speed V0 of the mobile platform 210 respectively, an overall displacement of the cleaning substrate 4221 is substantially perpendicular to the target direction. According to some other embodiments, when any one of the sliding slot 4223 and the sliding slot 4222 forms an angle other than 90 degrees with the target direction, the overall displacement of the cleaning substrate 4221 includes both a component perpendicular to the target direction and a component parallel to the target direction.

Further, a vibration buffering device 4215 is included, which is disposed on the connecting rod 4214 for reducing vibration in a specific direction. In this embodiment, the vibration buffering device 4215 is used for reducing the vibration in a direction of a movement component perpendicular to the target direction of the automatic cleaning apparatus.

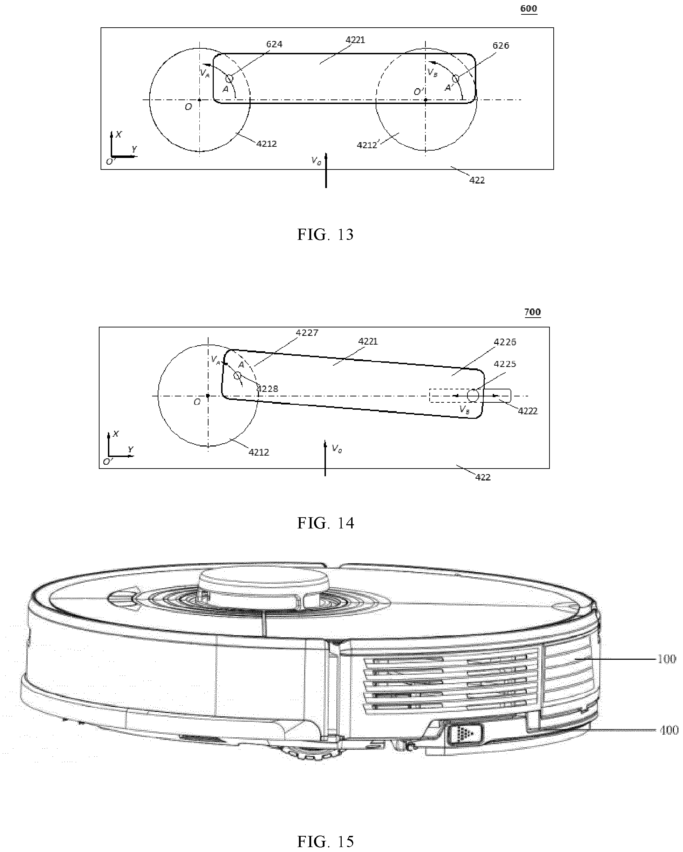

FIG. 13 shows another cleaning head driving mechanism 600 based on a double-crank mechanism according to a plurality of embodiments of the present disclosure. The driving mechanism 600 may be applied to the driving platform 421. The driving mechanism 600 includes a driving wheel 4212 (a first driving wheel), a driving wheel 4212' (a second driving wheel) and a cleaning substrate 4221.

The cleaning substrate 4221 has two ends, a first end thereof is connected to the driving wheel 4212 through a pivot 624 (a first pivot), and a second end thereof is connected to the driving wheel 4212' through a pivot 626 (a second pivot). A swiveling center of the driving wheel 4212 is a point O, and a pivoting center of the pivot 624 is a point A. The point O and the point A do not coincide, and a distance between the point O and the point A is a preset distance d. A swiveling center of the driving wheel 236 is a point O', and a pivoting center of the pivot 626 is point A'. The point O' and the point A' do not coincide, and a distance between the point O' and the point A' is a preset distance d. In some embodiments, the point A, the point A', the point O, and the point O' are located on the same plane. Therefore, the driving wheel 4212, the driving wheel 4212' and the cleaning substrate 4221 may form a double-crank mechanism (or a parallelogram mechanism), wherein the cleaning substrate 4221 acts as a coupling lever, and the driving wheels 4212 and 4212' act as two cranks.

Further, a vibration buffering device 4215 is included, which is disposed on the connecting rod 4214 for reducing vibration in a specific direction. In this embodiment, the vibration buffering device 4215 is used for reducing the vibration in a direction of a movement component perpendicular to the target direction of the automatic cleaning apparatus.

FIG. 14 shows a driving mechanism 700 based on a crank slider mechanism according to a plurality of embodiments of the present disclosure. The driving mechanism 700 may be applied to the driving platform 421. The driving mechanism 700 includes a driving wheel 4212, a cleaning substrate 4221 and a sliding slot 4222.

The sliding slot 4222 is formed in the supporting platform 422. The cleaning substrate 4221 includes a swiveling end 4227 and a sliding end 4226. The swiveling end 4227 is connected to the driving wheel 4212 through a pivot 4228. A swiveling center of the driving wheel 4212 is a point O, and a pivoting center of the pivot 4228 of the swiveling end is a point A. The point O and the point A do not coincide, and a distance between the point O and the point A is a preset distance d. The sliding end 4226 includes a slider 4225. The slider 4225 is a protrusion on the sliding end 4226. The slider 4225 is inserted into the sliding slot 4222 and may slide along the sliding slot 4222. Therefore, the driving wheel 4221, the cleaning substrate 4221, the slider 4225 and the sliding slot 4222 constitute the crank slider mechanism.

When the driving wheel 4212 rotates, the point A swivels along a circular path. Correspondingly, the swiveling end 4227 of the cleaning substrate 4221 follows the point A to swivel along the circular path, and the slider 4225 also slides in the sliding slot 4222 and reciprocates linearly. As a result, the cleaning substrate 4221 starts to reciprocate. According to some embodiments, the sliding slot 4222 is approximately perpendicular to a direction of the target direction of the moving speed of the mobile platform. Therefore, the linear motion of the sliding end 4226 includes a component perpendicular to the target direction, and the circular swiveling motion of the swiveling end 4227 includes both a component perpendicular to the target direction and a component parallel to the target direction.

In FIG. 14, a moving speed of the mobile platform is V0, and a moving direction thereof is a target direction, and the sliding slot 4222 is approximately perpendicular to the target direction. At this time, the reciprocating motion of the cleaning substrate 4221 as a whole includes both a movement component parallel to the target direction of the automatic cleaning apparatus and a movement component perpendicular to the target direction of the automatic cleaning apparatus.

Further, a vibration buffering device 4215 is included, which is disposed on the connecting rod 4214 for reducing vibration in a specific direction. In this embodiment, the vibration buffering device 4215 is used for reducing the vibration in a direction of a movement component perpendicular to the target direction of the automatic cleaning apparatus.

Further, the supporting platform 422 further includes an elastic detaching button 4229 disposed on at least one side of the supporting platform 422 for detachably connecting the supporting platform 422 to pawls 4216 of the driving platform 421. At least one assembly region 4224 is disposed on the supporting platform 422 for assembling the cleaning head 410. The assembly region 4224 may be formed of an adhesive material with an adhesive layer.

As shown in FIG. 9, the cleaning head 410 includes a movable region 412 connected to the cleaning substrate 4221 to reciprocate along the surface to be cleaned under the driving of the cleaning substrate 4221. The movable region 412 is disposed at a substantially central position of the cleaning head 410. An adhesive layer is provided on a side of the movable region 412 connected to the cleaning substrate 4221, and the movable region 412 is connected to the cleaning substrate 4221 through the adhesive layer.

Optionally, the cleaning head 410 further includes a fixed region 411 connected to a bottom of the supporting platform 422 through the at least one assembly region 4224. The fixed region 411 cleans at least a part of the operating surface along with the movement of the supporting platform 422.

Further, the cleaning head 410 further includes a flexible connecting portion 413 disposed between the fixed region 411 and the movable region 412 for connecting the fixed region 411 and the movable region 412. The cleaning head 410 further includes a sliding fastener 414 extending along an edge of the cleaning head 410 and detachably mounted at an engagement position 4225 of the supporting platform 422.

As shown in FIG. 9, the cleaning head 410 may be made of a material with certain elasticity, and is fixed to the surface of the supporting platform 422 through the adhesive layer so as to reciprocate. The cleaning head 410 is always in contact with the surface to be cleaned during operation.

The water delivery mechanism includes a water discharging device 4217 that may be directly or indirectly connected to a cleaning liquid outlet of a water tank (not shown), that is, a liquid outlet of the clean water tank. The cleaning liquid may flow to the water discharging device 4217 via the cleaning liquid outlet of the water tank, and may be evenly coated on the surface to be cleaned through the water discharging device. A connecting member (not shown) may be provided on the water discharging device, and the water discharging device is connected to the cleaning liquid outlet of the water tank through the connecting member. The water discharging device is provided with a distribution port which may be a continuous opening or a combination of several discontinuous small openings, and several nozzles may be provided at the distribution port. The cleaning liquid flows to the distribution port via the cleaning liquid outlet of the water tank and the connecting member of the water discharging device, and is evenly coated on the operating surface via the distribution port.

The water delivery mechanism may further include a clean water pump 4219 and/or a clean water pump pipe 4218. The clean water pump 4219 may be communicated with the cleaning liquid outlet of the water tank directly, or communicated with the cleaning liquid outlet of the water tank through the clean water pump pipe 4218.

The clean water pump 4219 may be connected to the connecting member of the water discharging device, and configured to pump the cleaning liquid from the water tank to the water discharging device. The clean water pump may be a gear pump, a vane pump, a plunger pump, a peristaltic pump, or the like.

The water delivery mechanism draws the cleaning liquid out of the clean water tank through the clean water pump 4219 and the clean water pump pipe 4218, and transports the cleaning liquid to the water discharging device. The water discharging device 4217 may be a sprinkler head, a drip hole, a wet cloth, or the like, and may uniformly spread water on the cleaning head so as to wet the cleaning head and the surface to be cleaned. Stains on the wetted surface to be cleaned can be cleaned more easily. In the wet cleaning module 400, the power/flow rate of the clean water pump may be adjusted.

In the above wet cleaning module, by adding the driving unit and the vibration region, the cleaning head may reciprocate to repeatedly clean the surface to be cleaned. Therefore, in a movement trajectory of a cleaning robot, a region may be cleaned several times by the cleaning robot passing the region just one time, thereby greatly enhancing the cleaning effect, especially for a region with more stains.

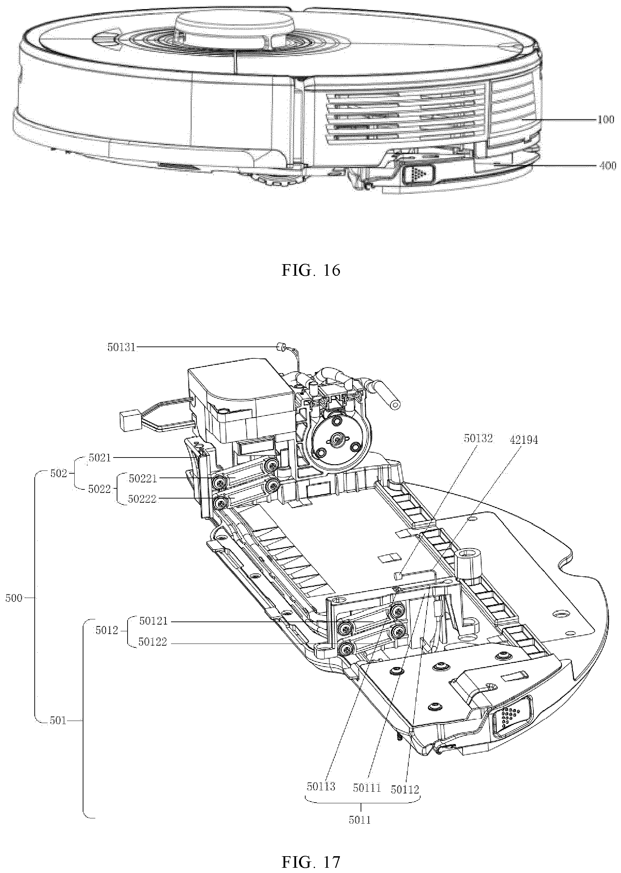

According to the detailed description of the present disclosure, the present disclosure provides a liftable and lowerable automatic cleaning apparatus, which includes: a mobile platform 100 configured to move automatically on an operating surface; and a wet cleaning module 400 movably connected to the mobile platform 100 through a four-link lifting and lowering structure 500, and configured to clean at least a part of the operating surface by means of wet cleaning. The four-link lifting and lowering structure 500 is a parallelogram structure for switching the wet cleaning module 400 between a lifting state and a lowering state. In the lifting state, the wet cleaning module 400 leaves the operating surface, as shown in FIG. 15; and in the lowering state, the wet cleaning module 400 is attached to the operating surface, as shown in FIG. 16.

As shown in FIGs. 17-18, the four-link lifting and lowering structure 500 includes: a first connecting end 501 for providing active power to switch the wet cleaning module 400 between the lifting state and the lowering state; and a second connecting end 502 disposed opposite to the first connecting end 501 and rotating under the action of the active power. The first connecting end 501 and the second connecting end 502 are located on both sides of the wet cleaning module 400 respectively to lift or lower the wet cleaning module 400 by stably providing a lifting or lowering force.

Specifically, the first connecting end 501 includes a first bracket 5011 fixedly connected to the bottom of the mobile platform 100. The first bracket 5011 is roughly shaped like a Chinese character " 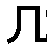 ", and includes a cross beam 50111, a first longitudinal beam 50114 and a second longitudinal beam 50115. A tail end of each of the first longitudinal beam 50114 and the second longitudinal beam 50115 is fixedly connected to the mobile platform 100 and the wet cleaning module 400 through a bolt to provide a supporting force when the wet cleaning module 400 is lifted and lowered.

The first connecting end 501 further includes a first connecting rod pair 5012, one end of which is rotatably connected to the first bracket 5011, and the other end of which is rotatably connected to the wet cleaning module 400. The first connecting rod pair 5012 may be of a hollowed-out structure, which can reduce an overall weight of lifting and lowering ends.

Optionally, the first connecting rod pair 5012 includes a first connecting rod 50121 and a second connecting rod 50122 which are arranged in parallel. A first end of each of the first connecting rod 50121 and the second connecting rod 50122 is rotatably connected to the first longitudinal beam 50114 through a movable stud, and a second end of each of the first connecting rod 50121 and the second connecting rod 50122 is rotatably connected to the wet cleaning module 400 through a movable stud. For example, both ends of each of the first connecting rod 50121 and the second connecting rod 50122 are provided with a through hole having a diameter greater than that of the movable stud, respectively, so that the movable stud may rotate freely within the through hole, and is fixedly connected to the first longitudinal beam 50114 through the through hole. When the motor 50131 provides a pulling force to the second ends through a cable, the first ends of the first connecting rod 50121 and the second connecting rod 50122 simultaneously rotate around the movable studs at the first ends, and the second ends thereof are lifted under the pulling force of the cable, so that the wet cleaning module 400 is lifted. When the motor 4211 releases the pulling force to the second ends through the cable, the first ends of the first connecting rod 50121 and the second connecting rod 50122 simultaneously rotate reversely around the movable studs at the first ends, and the second ends thereof are lowered under the action of gravity, so that the wet cleaning module 400 is lowered.

The lifting and lowering structure 500 further includes a cable 42194 for providing a pulling force to rotate the first connecting rod pair 5012 within a preset angle. The cable 42194 includes a cable motor terminal 50131 connected to the driving unit 420, for example, wound on and connected to the gear connected to the motor output shaft to extend and retract under the rotation of the motor; and a cable bracket terminal 50132 connected to the first bracket 5011. The motor lifts or lowers the second ends of the first connecting rod 50121 and the second connecting rod 50122 through the cable 42194.

Optionally, the first bracket 5011 further includes: a sliding slot 50112 extending along a surface of the cross beam 50111; and a snapping hole 50113 running through the cross beam 50111, disposed at an extension end of the sliding slot 50112 and configured to accommodate and snap the cable bracket terminal 50132. The cable 42194 is connected to the first ends of the first connecting rod 50121 and the second connecting rod 50122 through the sliding slot 50112 and the snapping hole 50113. The sliding slot 50112 can restrict a moving direction of the cable to ensure the stability of the lifting and lowering module, and the width of the sliding slot should match the thickness of the cable.

As shown in FIG. 17, the second connecting end 502 includes: a second bracket 5021 fixedly connected to the bottom of the mobile platform 100; and a second connecting rod pair 5022, one end of which is rotatably connected to the second bracket 5021, and the other end of which is rotatably connected to the wet cleaning module 400. The second connecting rod pair 5022 rotates along with the rotation of the first connecting rod pair 5012. The second connecting rod pair 5022 may be of a hollowed-out structure, which can reduce the overall weight of lifting and lowering ends.

Specifically, the second connecting rod pair 5022 includes a third connecting rod 50221 and a fourth connecting rod 50222 which are arranged in parallel. A first end of each of the third connecting rod 50221 and the fourth connecting rod 50222 is rotatably connected to the second bracket 5021 through a movable stud, and a second end of each of the third connecting rod 50221 and the fourth connecting rod 50222 is rotatably connected to the wet cleaning module 400 through a movable stud. For example, both ends of each of the third connecting rod 50221 and the fourth connecting rod 50222 are provided with a through hole having a diameter greater than that of the movable stud, respectively, so that the movable stud may rotate freely within the through hole, and is fixedly connected to the second bracket 5021 and the wet cleaning module 400 through the through hole. When the first connecting end 501 rotates under the driving of the motor 4211, the first ends of the third connecting rod 50221 and the fourth connecting rod 50222 simultaneously rotate around the movable studs at the first ends, and the second ends of the third connecting rod 50221 and the fourth connecting rod 50222 simultaneously rotate around the movable studs at the second ends, so that the wet cleaning module 400 is lifted. When a pulling force to the first connecting end 501 is released, the third connecting rod 50221 and the fourth connecting rod 50222 simultaneously rotate reversely around the movable studs, and are lowered under the action of gravity, so that the wet cleaning module 400 is lowered.

Through the four-link lifting and lowering structure disposed between the wet cleaning module and the mobile platform, the wet cleaning module may be lifted and lowered relative to the mobile platform. When a ground mopping task is performed, the wet cleaning module is lowered to enable the wet cleaning module to be in contact with the ground; and when the ground mopping task is completed, the wet cleaning module is lifted to separate the wet cleaning module from the ground, thereby avoiding the increased resistance due to the existence of the cleaning module when the cleaning apparatus moves freely on the surface to be cleaned.

In cooperation with a surface medium sensor and other sensors that can detect a surface type of the surface to be cleaned, the lifting and lowering module enables the wet cleaning module to perform a cleaning operation according to different surfaces to be cleaned. For example, the lifting and lowering module lifts the wet cleaning module in case of a carpet surface, and lowers the wet cleaning module in case of a floor surface, a floor tile surface or the like, for cleaning. Thus, a more comprehensive cleaning effect is achieved.

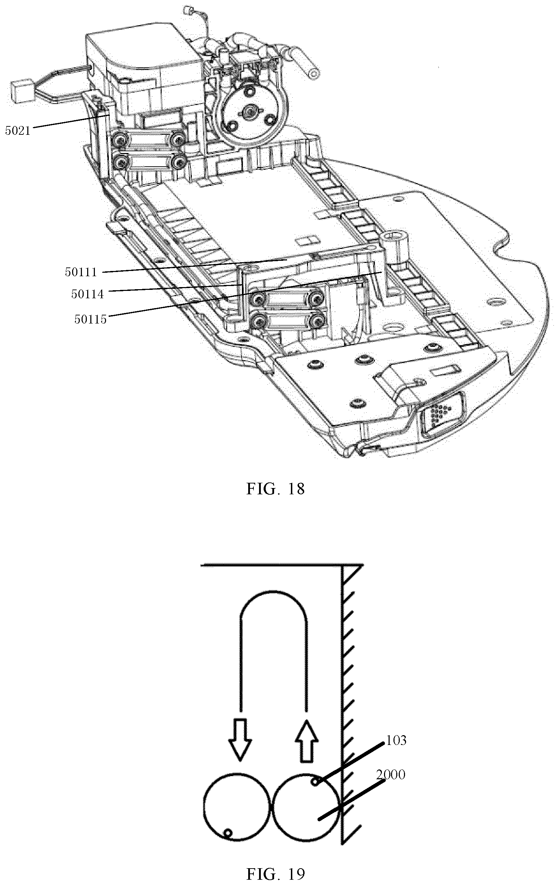

With the development of the ground sweeping robot, the existing ground sweeping robots have evolved into automatic cleaning apparatuses that combine dry cleaning and wet cleaning. As shown in FIG. 19, the automatic cleaning apparatus 2000 are mounted with both a dry cleaning module 151 and a wet cleaning module 400. During the cleaning process, the dry cleaning module 151 is located at a front end of the travelling direction in order to sweep the ground; and the wet cleaning module 400 is located at a rear end of the travelling direction to mop and clean the ground after the dry cleaning module 151 has finished the cleaning. However, the wet cleaning module 400 usually cannot be used for cleaning carpets and the like.

In practical applications, in order to prevent the wet cleaning module 400 from wetting the carpet, a wet cleaning module lifting and lowering mechanism is generally provided on the automatic cleaning apparatus 2000. In this way, the wet cleaning module can be lifted when the surface medium sensor 103 of the automatic cleaning apparatus 2000 recognizes the carpet, so that the wet cleaning module does not contact the carpet when the automatic cleaning apparatus 2000 passes over the carpet. The wet cleaning module 400 can be lowered again to mop and clean the ground when it is detected that the automatic cleaning apparatus leaves from the carpet.

However, due to the height limitation of the automatic cleaning apparatus 2000, a range in which the wet cleaning module 400 can be lifted and lowered is very limited, and is generally only about 1 mm. For carpets with long fluffs, or mats, clothes or the like, they may be wetted even if the wet cleaning module 400 is lifted, and the automatic cleaning apparatus 2000 may even be trapped and cannot move.

In addition, the automatic cleaning apparatus 2000, when changing its direction after the sweeping, may easily encounter a narrow gap surrounded by a number of other obstacles, and at this time, the automatic cleaning apparatus 2000 may easily be trapped and cannot extricate itself.

Based on this, an example embodiment of the present disclosure provides a method for controlling an automatic cleaning apparatus, which is herein illustrated with reference to FIGs. 19-24.

As shown in FIG. 19, when the automatic cleaning apparatus 2000 sweeps the ground having no carpet along the wall or sweeps the corners far from the carpet, the automatic cleaning apparatus 2000 can sense a distance between the body and the wall through a side distance sensor, and thereby can keep a constant distance between the body and the wall and travel along the edge of the wall. In addition, the automatic cleaning apparatus 2000 sweeps the dust from the edge of the wall into a main brush of the body through a front side brush 157, and may also mop and clean the ground with the wet cleaning module 400. After completing the sweeping task along the wall, the automatic cleaning apparatus 2000 may automatically change its direction to continue sweeping the ground, as shown in FIG. 19.

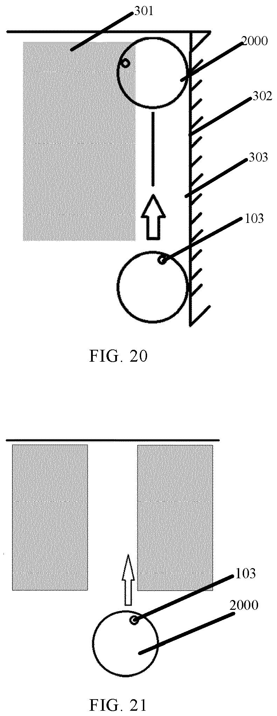

However, there is a case where the carpet 301 is detected when the automatic cleaning apparatus 2000 sweeping the ground along the wall changes its direction while encountering an obstacle such as a wall, i.e., a case where a narrow gap 303 occurs between the carpet 301 and the wall 302 as shown in FIG. 20. Since the surface medium sensor 103 is located on a side of the wall 302 when the automatic cleaning apparatus 2000 enters the narrow gap 303, the surface medium sensor 103 may fail to detect the carpet 301 and is not triggered at this time. However, the surface medium sensor 103 is triggered when the automatic cleaning apparatus 2000 turns back after meeting obstacles or finishing the sweeping along the wall; and if the width of the narrow gap 303 is not large enough for the automatic cleaning apparatus 2000 to change the direction, the automatic cleaning apparatus 2000 may get trapped and cannot get out, thereby causing troubles to the user.

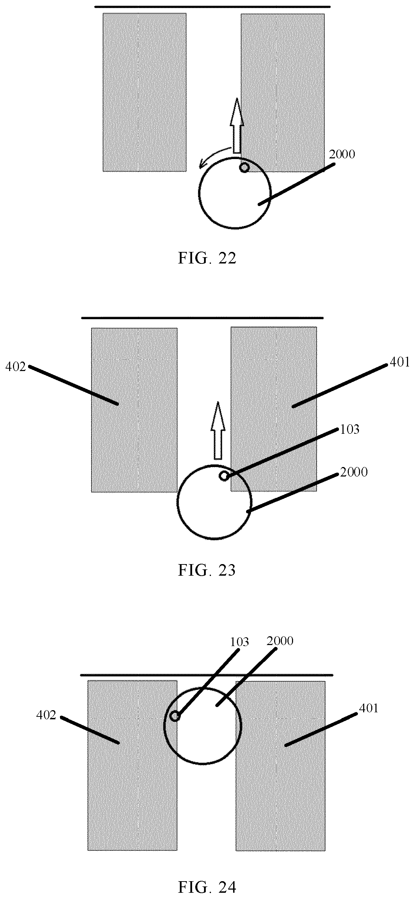

Alternatively, as shown in FIG. 21, the automatic cleaning apparatus 2000 controls the body to rotate by a certain angle, for example, 15 degrees counterclockwise as shown in FIG. 22, if the carpet is detected before the automatic cleaning apparatus 2000 sweeps along the edge of the carpet. In addition, the automatic cleaning apparatus 2000 may advance by a small distance in a direction in which this angle is directed; after advancing by a small distance, the automatic cleaning apparatus 2000 may turn back to the previous angle and continue to advance in the direction it turns back, and meanwhile detect the presence or absence of the carpet. If the carpet can still be detected, the automatic cleaning apparatus may further rotate by a certain angle and repeat the aforesaid process, and the mode of sweeping along the edge of the carpet as shown in FIG. 23 will be initiated until no carpet is detected.

The automatic cleaning apparatus 2000 may change the direction after finishing the sweeping along the edge of the carpet, e.g., after finishing the sweeping along the edge of the first carpet 401 as shown in FIG. 24. However, during the process of changing the direction, the automatic cleaning apparatus 2000 may detect another carpet, i.e., the second carpet 402 in FIG. 24. If a gap between the first carpet 401 and the second carpet 402 is narrow, a carpet identifying device 103 fails to detect the second carpet 402 when the automatic cleaning apparatus 2000 enters the gap, because the carpet identifying device 103 is located at a side of the first carpet 401, the carpet identifying device 103 is not triggered at this time. When the automatic cleaning apparatus 2000 turns back after finishing the sweeping along the edge of the first carpet 401, the carpet identifying device 103 is triggered; and if the width of the gap is not large enough for the automatic cleaning apparatus 2000 to change the direction, the automatic cleaning apparatus 2000 may be trapped and cannot get out, thereby causing troubles to the user.

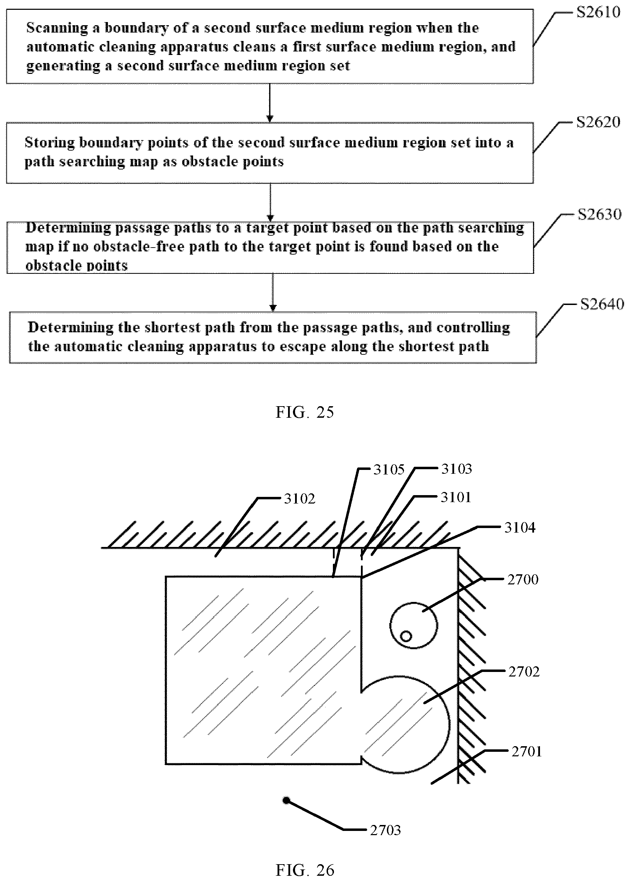

For the situation above, with reference to FIG. 25, a flow chart of the method for controlling the automatic cleaning apparatus according to an example embodiment of the present disclosure is shown. The method may include the following steps S2610 to S2640.

In S2610, a boundary of a second surface medium region is scanned when the automatic cleaning apparatus cleans a first surface medium region, and a second surface medium region set is generated.

In S2620, boundary points in the second surface medium region set are treated as obstacle points and stored in a path searching map.

In S2630, passage paths to a target point are determined based on the path searching map if no obstacle-free path to the target point is searched out based on the obstacle points.

In S2640, the shortest path from the passage paths is determined, and the automatic cleaning apparatus is controlled to extricate itself along the shortest path.

In the method for controlling the automatic cleaning apparatus according to example embodiment of the present disclosure, when the automatic cleaning apparatus is trapped by an obstacle as encountered when sweeping along an edge of the first surface medium region such as a wall, a carpet, and the like, the automatic cleaning apparatus may determine the obstacle points based on the boundary of the second surface medium region as scanned during the cleaning process; then, the automatic cleaning apparatus may determine the passage paths to the target point in conjunction with the obstacle points, and determine the shortest path from the determined passage paths, such that the automatic cleaning apparatus is then controlled to extricate itself along the shortest path, thereby helping the automatic cleaning apparatus to extricate itself as quickly as possible to avoid the trapping phenomenon.

The method for controlling the automatic cleaning apparatus according to example embodiment of the present disclosure provides a method regarding how to enable the automatic cleaning apparatus to extricate itself after finishing the sweeping of a narrow gap region between a carpet and a wall or between two carpets, such that the trapping of the automatic cleaning apparatus can be prevented, the ability of the automatic cleaning apparatus to extricate itself automatically can be improved, and the failure rate of the automatic cleaning apparatus can be reduced, thereby improving the user experience.

It should be noted that the method for controlling the automatic cleaning apparatus is applicable when the automatic cleaning apparatus is in a mode in which the carpet is not cleaned or a mode in which the wet cleaning module is initiated. Under the two modes, the automatic cleaning apparatus cannot move above the carpet, and is namely in a mode of only cleaning the first surface medium region. Thus, in the event that the automatic cleaning apparatus is trapped by a carpet, the method for controlling the automatic cleaning apparatus according to this example embodiment of the present disclosure can control the automatic cleaning apparatus to extricate itself as soon as possible with the shortest path, such that the probability of the automatic cleaning apparatus being trapped by the carpet can be reduced.

In addition, the first surface medium here is one or more of a ground surface medium such as wooden floor, carpet, tile, cement surface, and the like; and the second surface medium is one or more of a ground surface medium such as wooden floor, carpet, tile, cement surface, and the like, which is different from the first surface medium.

The method for controlling the automatic cleaning apparatus according to example embodiments of the present disclosure is now explained and illustrated by taking the automatic cleaning apparatus 2700 as trapped shown in FIG. 26 as an example.

When the automatic cleaning apparatus 2700 sweeps a first surface medium region 2701 (e.g., the ground) along a wall and enters a location shown in FIG. 26, the automatic cleaning apparatus 2700 may get trapped by a second surface medium region 2702 (e.g., the carpet) shown in FIG. 26. At this point, the automatic cleaning apparatus may extricate itself by the method for controlling the automatic cleaning apparatus according to example embodiments of the present disclosure, which is specifically implemented as follows.

When the automatic cleaning apparatus 2700 cleans the first surface medium region 2701, the boundary of the second surface medium region 2702 may be scanned during the cleaning process to generate a second surface medium region set, such that the automatic cleaning apparatus 2700 can extricate itself based on the second surface medium region set when trapped by the second surface medium region 2702.

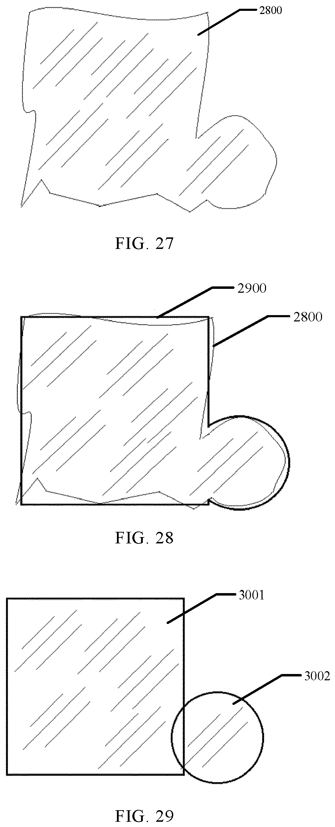

According to example embodiments of the present disclosure, the boundary of the second surface medium region may be scanned with a second surface medium region identifying device, and the boundary of the carpet region may for example be scanned with a carpet identifying device 103. After the scanning, an initialized region 2800 as shown in FIG. 27 may be produced based on the boundary as scanned, and the initialized region 2800 is recorded in the automatic cleaning apparatus 2700.

Then, boundary coordinates of the initialized region may be merged. For example, adjacent boundary coordinates are merged into one coordinate to obtain a merged region 2900 as shown in FIG. 28 that is smoother than the boundary of the initialized region. As further shown in FIG. 29, the merged region 2900 is split according to a predetermined shape to form a plurality of subregions 3001, 3002, and the plurality of subregions 3001, 3002 form the second surface medium region set.

In practical applications, the predetermined shape may be square, round, and also other shapes such as rhombus. As shown in FIG. 29, the subregion 3001 is a square region and the subregion 3002 is a round region as determined according to the predetermined shape. Example embodiments of the present disclosure do not particularly define the specific predetermined shapes.

After acquiring the second surface medium region set, the boundary points in the second surface medium region set may be treated as obstacle points and stored in the path searching map. In other words, the boundary points in each subregion 3001, 3002 of the second surface medium region set are all used as obstacle points, and the obstacle points are added to the path searching map. The automatic cleaning apparatus, when searching for a path based on the path searching map, may avoid the obstacle points and instead look for an obstacle-free path to avoid the occurrence of trapping.

However, if an obstacle-free path to a target point 2703 cannot be searched out based on obstacle points as shown in FIG. 26, a passage path to the target point 2703 may be determined based on the path searching map. The method for controlling the automatic cleaning apparatus according to example embodiments of the present disclosure can typically determine a plurality of passage paths, and then determine the shortest path from the plurality of passage paths, such that the automatic cleaning apparatus 2700 can be controlled to extricate itself along the shortest path.

According to example embodiments of the present disclosure, the method for determining the plurality of passage paths includes following methods.

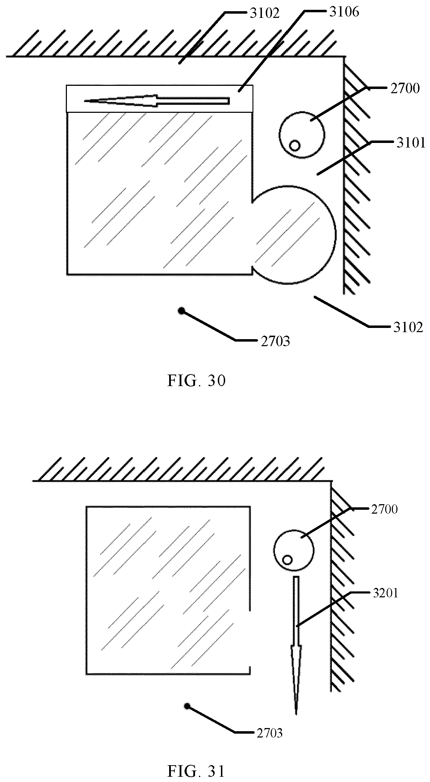

With reference to FIG. 26 and FIG. 30, the first passage path determining method firstly includes performing a step of deleting target obstacle points. The step of deleting the target obstacle points includes determining, based on the path searching map storing obstacle points therein, a reachable region 3101 and an unreachable region 3102 of the automatic cleaning apparatus 2700 based on a current location of the automatic cleaning apparatus 2700. The reachable region 3101 refers to a region to which the automatic cleaning apparatus 2700 can move without touching the obstacle points, and the unreachable region 3102 refers to a region to which the automatic cleaning apparatus 2700 cannot move without touching the obstacle points.

After determining the reachable region 3101 and the unreachable region 3102, the obstacle points on a connection boundary 3103 between the reachable region 3101 and the unreachable region 3102 (shown as a dashed line in FIG. 26) can be found according to the connection boundary 3103, to be treated as the target obstacle points 3104, and the target obstacle points 3104 are then deleted from the path searching map. As a result, the boundary of the reachable region 3101 may be expanded, thereby changing the connection boundary 3103. Afterwards, the step of deleting the target obstacle points on the new connection boundary is performed to delete the next target obstacle point 3105 to further expand the boundary of the reachable region 3101.

The step of deleting the target obstacle points is repeated until the passage path 3106 to the target point 2703 is found from the path searching map where the target obstacle points have been deleted.

According to example embodiments of the present disclosure, when finding the target obstacle points based on the connection boundary between the reachable region and the unreachable region, the obstacle points on the connection boundary close to the automatic cleaning apparatus may be found as the target obstacle points, by deleting the target obstacle points, the possibility that the passage path as acquired is the shortest path is increased.

According to the first passage path determining method, it is possible to acquire a plurality of passage paths, and the shortest path may be determined from the plurality of passage paths to facilitate the passing and extrication of the automatic cleaning apparatus.

According to the second passage path determining method, with reference to FIG. 29 and FIG. 31, a region having the smallest area, i.e., subregion 3002, is determined from the second surface medium region set. Then, the boundary points of the region 3002 having the smallest area are deleted from the path searching map. Since the obstacle points are composed of the boundary points including the subregion 3002, deleting the boundary points of the subregion 3002 is equivalent to deleting the obstacle points corresponding to the subregion 3002. Afterwards, the obstacle points in the path searching map are updated. Then, the passage path 3201 to the target point can be determined from the updated obstacle points.

After determining the passage path 3201, the passage path 3201 may be directly determined as the shortest path to control the automatic cleaning apparatus 2700 to pass along the path. It is also possible to determine the shortest path in combination with the passage path determined by the first passage path determining method, which is not specifically limited by example embodiments of the present disclosure.

In other words, in practical applications, it is possible to determine the passage path only according to the first passage path determining method, or determine the passage path only according to the second passage path determining method. Preferably, a plurality of passage paths can be determined simultaneously according to the first passage path determining method and the second passage path determining method, and the shortest path is then selected from the plurality of passage paths as an optimal path, to facilitate the automatic cleaning apparatus to extricate itself along the shortest path.

According to the method for controlling the automatic cleaning apparatus according to example embodiments of the present disclosure, when the automatic cleaning apparatus is trapped by the second surface medium region, the boundary points of the second surface medium region as scanned may be treated as the obstacle points. Then, the obstacle points may be deleted by different methods such as the first passage path determining method and the second passage path determining method, to determine the shortest path for the automatic cleaning apparatus, such that the path of the automatic cleaning apparatus passing over the second surface medium region can be reduced, and namely the crushing of the automatic cleaning apparatus on the second surface medium region can be minimized, thereby facilitating the automatic cleaning apparatus to extricate itself as soon as possible.

In practical applications, the automatic cleaning apparatus further includes other features for achieving the overall operation, which will not be detailed in this example embodiment.

It should be noted that the method is not only applicable for the automatic cleaning apparatus having the dry and wet cleaning modules, but also for the ground sweeping robot only having the dry cleaning module or the mopping robot only having the wet cleaning module, and other intelligent robots with autonomous walking mechanisms that need to recognize the ground form, which is not limited in the example embodiments of the present disclosure.

It should be noted that although respective steps of the method of the present disclosure are described in a specific order in accompanying drawings, it does not require or imply that the steps must be performed in the specific order, or that the desired result can only be achieved if all the steps as shown are performed. Additionally or alternatively, some steps may be omitted, multiple steps may be combined into one step for execution, and/or one step may be decomposed into multiple steps for execution.

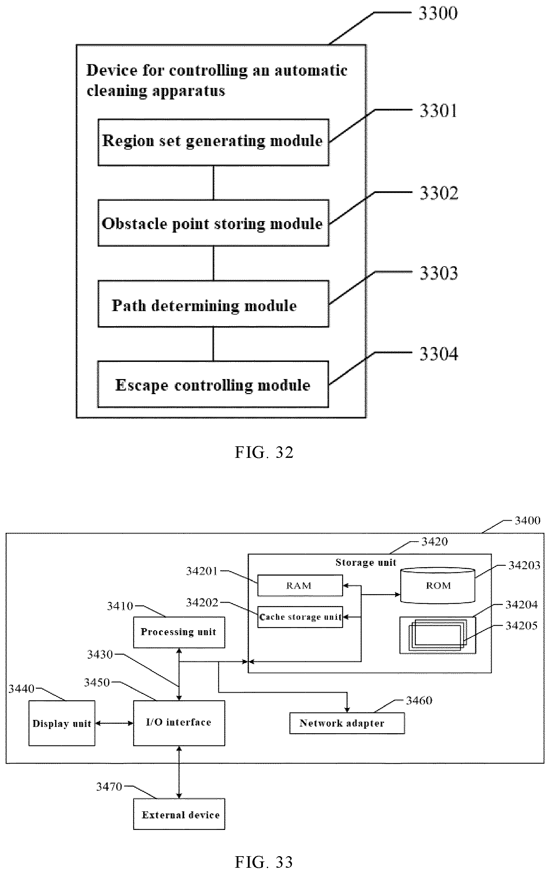

According to example embodiments of the present disclosure, a device for controlling an automatic cleaning apparatus is provided for an automatic cleaning apparatus including a surface medium sensor. As shown in FIG. 32, the device 3300 for controlling the automatic cleaning apparatus may include: a region set generating module 3301, an obstacle point storing module 3302, a path determining module 3303, and an extrication controlling module 3304.

The region set generating module 3301 is configured to scan a boundary of a second surface medium region when the automatic cleaning apparatus cleans a first surface medium region, and generate a second surface medium region set.

The obstacle point storing module 3302 is configured to treat boundary points of the second surface medium region set as obstacle points, and store the obstacle points in a path searching map.

The path determining module 3303 is configured to determine passage paths to a target point based on the path searching map if no obstacle-free path to the target point is searched out based on the obstacle points.

The extrication controlling module 3304 is configured to determine the shortest path from the passage paths, and control the automatic cleaning apparatus to extricate itself along the shortest path.

The specific details of each module of the device for controlling the automatic cleaning apparatus have been described in detail in the corresponding method for controlling the automatic cleaning apparatus, and will not be repeated here.

It shall be noted that although several modules or units of the apparatus for executing actions are mentioned in the detailed description, this division is not mandatory. In fact, according to embodiments of the present disclosure, the features and functions of two or more modules or units described above may be embodied in a single module or unit. Conversely, the features and functions of a module or feature described above may be further divided and embodied by a plurality of modules or units.

According to example embodiments of the present disclosure, an electronic device capable of implementing the method is further provided.

Those of skill in the art may understand that respective aspects of the present disclosure may be implemented as a system, a method, or program product. Thus, aspects of the present disclosure may be specifically implemented in the form of a fully hardware, a fully software (including firmware, microcode, etc.), or a combination of hardware and software, which can be collectively referred to herein as a "circuit", "module" or "system".

The electronic device 3400 according to this embodiment of the present disclosure is described below with reference to FIG. 33. The electronic device 3400 shown in FIG. 33 is only an example and should not impose any limitation on the functionality and application scope of embodiments of the present disclosure.

As shown in FIG. 33, the electronic device 3400 is represented as a general-purpose computing device. Components of the electronic device 3400 may include, but are not limited to, at least one processing unit 3410 described above, at least one storage unit 3420 described above, a bus 3430 connecting different system components (including the storage unit 3420 and the processing unit 3410), and a display unit 3440.

The memory unit 3420 stores program codes therein, and the program codes are executed by the processing unit 3410, such that the processing unit 3410 performs the steps according to the various example embodiments of the present disclosure described in the "Exemplary Methods" section of this specification. For example, the processing unit 3410 may execute the following steps as shown in FIG. 25, i.e., the step S2610 of scanning a boundary of a second surface medium region when the automatic cleaning apparatus cleans a first surface medium region, and generating a second surface medium region set; the step S2620 of treating boundary points in the second surface medium region set as obstacle points, and storing the obstacle points in a path searching map; the step S2630 of determining passage paths to a target point based on the path searching map if no obstacle-free path to the target point is searched out based on the obstacle points; and the step S2640 of determining the shortest path from the passage paths, and controlling the automatic cleaning apparatus to extricate itself along the shortest path.

The storage unit 3420 may include a readable medium in the form of a volatile storage unit, such as a random-access memory (RAM) 34201 and/or cache storage unit 34202, and may further include a read-only memory (ROM) 34203.

The storage unit 3420 may further include a program/utility tool 34204 having a set of (at least one) program modules 34205. The program module 34205 includes, but is not limited to, an operating system, one or more applications, other program modules, and program data, and each of these examples or some combination may include an implementation of a network environment.

The bus 3430 may be a local bus that represents one or more of several types of bus structures, including a memory cell bus or memory cell controller, a peripheral bus, a graphics acceleration port, a processing unit, or any bus structure using any of the plurality of bus structures.

The electronic device 3400 may also communicate with one or more external devices 3470 (e.g., a keyboard, a pointing device, a Bluetooth device, etc.), and may also communicate with one or more devices that enable the user to interact with the electronic device 3400, and/or with any device (e.g., routers, modems, etc.) that enables the electronic device 3400 to communicate with one or more other computing devices. The communication may be executed via an input/output (I/O) interface 3450. The electronic device 3400 may further communicate with one or more networks (e.g., local area network (LAN), wide area network (WAN), and/or public networks, such as the Internet) via a network adapter 3460. As shown, the network adapter 3460 communicates with other modules in the electronic device 3400 via the bus 3430. It should be understood that, although not shown in the figures, other hardware and/or software modules may be adopted in conjunction with the electronic device 3400, which includes, but is not limited to, microcode, a device drive, a redundant processing unit, an external disk drive array, a RAID system, a tape drive, and a data backup storage system and the like.

Through the descriptions of the above embodiments, it is easy for those skilled in the art to understand that the example embodiments described here may be realized by means of software or by combining software with necessary hardware. Therefore, the technical solution according to the embodiments of the present disclosure can be embodied in the form of a software product, and the software product can be stored in a non-volatile storage medium (which may be a CD-ROM, a USB flash drive, a mobile hard disk, etc.) or on the network, and includes several instructions to enable a computing apparatus (which may be a personal computer, a server, a terminal device, or a network apparatus, etc.) to execute the method according to the embodiments of the present disclosure.

In an example embodiment of the present disclosure, a computer-readable storage medium is also provided, on which a program product capable of implementing the above method of the Description is stored. In some possible embodiments, various aspects of the present disclosure may also be realized in the form of a program product, which includes a program code. When the program product runs on a terminal apparatus, the program code is used to cause the terminal apparatus to execute the steps according to various example embodiments of the present disclosure described in the above "Exemplary Methods" section of the Description.

The program product for realizing the above method according to the embodiments of the present disclosure may adopt a portable compact disc read-only memory (CD-ROM) and include the program code, and may run on the terminal apparatus, such as a personal computer. However, the program product of the present disclosure is not limited thereto. In this document, the readable storage medium may be any tangible medium containing or storing a program, and the program may be used by or in combination with an instruction execution system, a device or a component.

The program product may adopt any combination of one or more readable mediums. The readable medium may be a readable signal medium or a readable storage medium. The readable storage medium may be, for example, but is not limited to, electrical, magnetic, optical, electromagnetic, infrared, or semiconductor systems, devices or elements, or any combination of the above. More specific examples (a non-exhaustive list) of the readable storage medium include: an electrical connection with one or more conducting wires, a portable disk, a hard disk, an RAM, an ROM, an erasable programmable read-only memory (EPROM or flash memory), an optical fiber, a portable compact disk read-only memory (CD-ROM), an optical storage element, a magnetic storage element, or any suitable combination of the above.

The computer-readable signal medium may include a data signal propagated in a baseband or as part of a carrier wave, in which a readable program code is carried. Such propagated data signal may take many forms, including but not limited to an electromagnetic signal, an optical signal or any suitable combination of the above. The readable signal medium may also be any readable medium other than the readable storage medium, and the readable medium may send, propagate or transmit a program for use by or in combination with an instruction execution system, a device or an element.

The program code contained in the readable medium may be transmitted by any suitable medium, including but not limited to a wireless medium, a wired medium, an optical cable, RF, etc., or any suitable combination of the above.

The program code for executing the operations of the present disclosure may be written in any combination of one or more programming languages, including object-oriented programming languages, such as Java and C++, and conventional procedural programming languages, such as "C" or similar programming languages. The program code may be completely executed on a user computing apparatus, partially executed on the user apparatus, executed as an independent software package, partially executed on the user computing apparatus and partially executed on a remote computing apparatus, or completely executed on the remote computing apparatus or a server. In the situation involving the remote computing apparatus, the remote computing apparatus may be connected to the user computing apparatus through any type of network, including the LAN or WAN, or may be connected to an external computing apparatus (for example, through the Internet by using an Internet service provider).

In addition, the above accompanying drawings are only schematic illustrations of the processing included in the method according to the example embodiments of the present disclosure, and are not for limiting purposes. It is easy to understand that the processing shown in the above accompanying drawings does not indicate or restrict the time sequence of the processing. In addition, it is also easy to understand that the processing may be for example performed synchronously or asynchronously in multiple modules.

Other embodiments of the present disclosure will be apparent to those skilled in the art from consideration of the Description and practice of the disclosed disclosure here. The present application is intended to cover any variations, uses, or adaptive changes of the present disclosure, which follow the general principles of the present disclosure and include common general knowledge or customary technical means, which are not disclosed herein, in the art. The Description and embodiments are to be considered as examples only, and a true scope and spirit of the present disclosure are indicated by the claims.

It should be appreciated that the present disclosure is not limited to the exact structure that has been described above and illustrated in the accompanying drawings, and that various modifications and changes can be made without departing from the scope thereof. The scope of the present disclosure is only defined by the appended claims.

## Claims

1. A method for controlling an automatic cleaning apparatus, comprising:
scanning a boundary of a second surface medium region when the automatic cleaning apparatus cleans a first surface medium region, and generating a second surface medium region set;
treating boundary points in the second surface medium region set as obstacle points, and storing the obstacle points in a path searching map;
determining passage paths to a target point based on the path searching map if no obstacle-free path to the target point is searched out based on the obstacle points; and
determining the shortest path from the passage paths, and controlling the automatic cleaning apparatus to extricate itself along the shortest path.

2. The method for controlling the automatic cleaning apparatus according to claim 1, wherein the scanning the boundary of the second surface medium region and generating the second surface medium region set comprises:
scanning the boundary of the second surface medium region, generating an initialized region, and recording the initialized region;
acquiring a merged region by merging boundary coordinates of the initialized region; and
splitting the merged region into a plurality of subregions according to a predetermined shape, the plurality of subregions forming the second surface medium region set.

3. The method for controlling the automatic cleaning apparatus according to claim 2, wherein the treating the boundary points in the second surface medium region set as the obstacle points comprises:
treating boundary points in each subregion of the second surface medium region set as the obstacle points; and
adding the obstacle points to the path searching map.

4. The method for controlling the automatic cleaning apparatus according to any one of claims 1 to 3, wherein the determining the passage paths to the target point based on the path searching map comprises:
performing a step of deleting target obstacle points, wherein the step of deleting the target obstacle points comprises determining, based on the path searching map, a reachable region and an unreachable region of the automatic cleaning apparatus based on a current location of the automatic cleaning apparatus;
looking for, based on a connection boundary between the reachable region and the unreachable region, obstacle points on the connection boundary and treating the obstacle points on the connection boundary as the target obstacle points;
deleting the target obstacle points from the path searching map; and
repeating the step of deleting the target obstacle points, until the passage path to the target point is searched out from the path searching map where the target obstacle points have been deleted.

5. The method for controlling the automatic cleaning apparatus according to claim 4, wherein the looking for the target obstacle points based on the connection boundary between the reachable region and the unreachable region comprises:
looking for, based on the connection boundary between the reachable region and the unreachable region, the obstacle points on the connection boundary that are close to the automatic cleaning apparatus, and treating the obstacle points as the target obstacle points.

6. The method for controlling the automatic cleaning apparatus according to any one of claims 1 to 5, wherein the determining the passage paths to the target point based on the path searching map comprises:
determining a region having the smallest area from the second surface medium region set;
deleting boundary points of the region having the smallest area from the path searching map, and updating obstacle points in the path searching map; and
determining the passage paths to the target point from the updated obstacle points.

7. The method for controlling the automatic cleaning apparatus according to any one of claims 1 to 6, wherein the method is applied to the automatic cleaning apparatus in a mode of cleaning only the first surface medium region.

8. A device for controlling an automatic cleaning apparatus, comprising:
a region set generating module, configured to scan a boundary of a second surface medium region when the automatic cleaning apparatus cleans a first surface medium region, and generate a second surface medium region set;
an obstacle point storing module, configured to treat boundary points in the second surface medium region set as obstacle points, and store the obstacle points in a path searching map;
a path determining module, configured to determine passage paths to a target point based on the path searching map if no obstacle-free path to the target point is searched out based on the obstacle points; and
an extrication controlling module, configured to determine the shortest path from the passage paths, and control the automatic cleaning apparatus to extricate itself along the shortest path.

9. A computer-readable storage medium for storing computer programs, wherein the computer programs, when executed by a processor, implement the method for controlling the automatic cleaning apparatus according to any one of claims 1 to 7.

10. An electronic device, comprising:
a processor; and
a memory for storing an executable instruction of the processor;
wherein the processor is configured to perform the method for controlling the automatic cleaning apparatus according to any one of claims 1 to 7 by executing the executable instruction.
